# EUROPEAN PATENT SPECIFICATION

(11) **EP 1 247 220 B1**
(45) Date of publication and mention of the grant of the patent: **10.09.2003**
(21) Application number: 00941407.9
(22) Date of filing: 14.06.2000
(51) Int. Cl.: G06F 17/60, H04H 7/00, H04H 1/02

(54) **METHOD FOR PROVIDING A FREE INTERNET CONNECTION BY SUBSTITUTING COMMERCIALS IN AN INTERNET RADIO BROADCASTING SYSTEM**
VERFAHREN ZUR BEREITSTELLUNG EINER KOSTENLOSEN INTERNETVERBINDUNG DURCH ERSETZEN VON WERBESENDUNGEN IN EINEM INTERNETRUNDFUNKÜBERTRAGUNGSSYSTEM
PROCEDE POUR GENERER UNE CONNECTION GRATUITE A INTERNET EN REMPLACANT DES PUBLICITES SUR UN SYSTEME DE DIFFUSION RADIO SUR INTERNET

(30) Priority: 05.01.2000 US 477958
(43) Date of publication of application: 09.10.2002
(73) Proprietor: Geode Electronics LLC, Mount Olive, NJ 07828 (US); Emerson, Harry E. III, Budd Lake, NJ (US); Grywalski, William A., Budd Lake, NJ 07828 (US); Gerald, Lebow M., Valhalla, NY 10595 (US)
(72) Inventor: EMERSON, Harry, E., III, Budd Lake, NJ (US); GRYWALSKI, William, A., Budd Lake, NJ 07828 (US); GERALD,Lebow, M., Valhalla, NY 10595 (US)
(74) Representative: Haley, Stephen
(86) International application number: US0016345
(87) International publication number: WO01050368

(56) References cited:
- EP-A- 0 424 648
- EP-A- 0 751 640
- EP-A- 0 847 156
- WO-A-97/49241
- US-A- 5 933 811
- US-A- 6 112 192
- H. Holbrook, D. Cheriton: "IP Multicast Channels: EXPRESS Support for Large-scale Single-source Applications", Proc. SIGCOMM, 8/99, Cambridge, MA, pp. 65-78.
- G. Stoll, U. Felderhoff, G. Spikofski: "Internet radio and excellent audio quality: dreamboat or reality?" International Broadcasting Convention , 1997, pp. 192-201

## Description

### CROSS-REFERENCE TO RELATED APPLICATIONS

This application claims the benefit of United States Provisional Patent Application No. 60/119,446, filed February 10, 1999, entitled "Method For Modifying Advertising Content Of Internet Broadcasts".

### BACKGROUND OF THE INVENTION

### 1. Field of the Invention

The present invention relates to a method for substituting replacement commercial advertisements in place of original broadcast commercials for radio programs broadcast via the Internet; more particularly, to a method for transmitting advertisements to a user of an Internet Radio System in which the cost of the connection from an Internet Service Provider is subsidized by advertising; and still more particularly to a method for substituting replacement commercial advertisements in place of original broadcast commercials for radio programs broadcast via the Internet which subsidize the cost of the Internet connection of a user of an Internet Radio System.

### 2. Description of the Prior Art

Advertising is the primary mechanism by which producers of products and services capture the attention of potential consumers. In today's global marketplace of chaos and dislocation, the need for advertising has never been greater. Traditionally, mass advertising occurs by way of mass distribution through television, radio, newspapers and the like. Usually, advertisers prescribe the media content and pay for the mass distribution thereof. In some instances, the consumer subsumes a portion of the costs of the advertisements, as for example, by paying for a newspaper subscription. The advent of computer-driven technology, and especially the Internet, has rendered traditional advertising methods obsolete.

The Internet is a system of linked computers that provides for global information exchange and includes innumerable sites, each of which presents advertising, research and other information about a particular organization. Many organizations now rely on the Internet to obtain and transmit crucial and, oftentimes, sensitive information. Thus, the Internet has quickly become one of the most effective means by which an organization can globally advertise its goods and services.

Computer users are connected to the Internet by means of an Internet Service Provider ("ISP"). Generally, these ISP's require that the user provide some type of monetary consideration for Internet connection. Typically, a user subscribes to an ISP account in which the user pays a fee for the ability to access the Internet. ISPs provide three principle types of resources to consumers in exchange for the monthly fee: (i) dial in ports, each consisting of a phone line and a modem, one pair of which is consumed by each user for the duration of their connection; (ii) computer systems for processing email and hosting user Web pages; and, (iii) bandwidth for data transmitted to the user from other locations on the Internet as the users view pages on Web sites. The computer systems resource requirement is relatively independent of subscriber usage, whereas the ISP costs for both dial in ports and bandwidth are usage dependent.

There are several contemporaneous advertising supported arrangements wherein computer users are given free Internet access through an ISP. These advertising arrangements, in general, present visual advertising material ("banner ads") to the computer users in exchange for the free service. With these arrangements, the entity managing the free service is able to control the presentation of advertising such that the amount or duration of advertising that the user is exposed to is proportionate to the amount of time spent on line. In this way, the ISP can recoup the cost of provisioning the service regardless of the amount of time the user stays connected.

It is presently possible to listen to radio programs with a personal computer or other device capable of receiving audio data via the Internet. This is because it is becoming conventional for a regular broadcast radio station to make its programs available via the Internet. Internet radio programs originate from many different regions of the world. As a result, they are frequently sprinkled with commercial advertisements that are targeted to the region from which the program originated. A commercial for an automobile dealer in Lisbon is of little value to an Internet listener in Philadelphia. On the other hand, an Internet Hosting Service providing radio station content to the listener would benefit by substituting commercials of advertisers interested in reaching such listeners. The original commercials provide no benefit to the original radio station or advertisers, nor to the listener, nor are they a source of revenue for a business organization such as an Internet Hosting Service which presents radio stations on the Internet. Document WO 97/49 241 discloses a system for on-the-fly substitution of a section of a broadcast signal which enables a broadcaster, for example, to transmit simultaneously several different commercials in different languages to different countries.

There remains a need in the art for an effective way to generate revenue by selling advertising which will replace original broadcast commercials in radio programs transmitted via the Internet. There also remains a need in the art for an effective way to generate revenue by selling advertising to subsidize access to Internet entertainment sources for an Internet entertainment device such as an Internet Radio System. Specifically, the advertising revenue must pay the ISP to cover the cost of the resources consumed in the process of providing Internet connectivity to the user. And, there remains a need in the art for an effective way to generate revenue by selling advertising which will replace original broadcast commercials in radio programs transmitted via the Internet which can subsidize access to Internet entertainment sources for an Internet entertainment device such as an Internet Radio System.

### SUMMARY OF THE INVENTION

In accordance with the present invention, there is provided a method for providing a free Internet connection for delivery of edited program content to a user of an Internet Radio System by enabling an Internet Hosting Service to generate revenue by selling and transmitting targeted advertisements to said Internet Radio System, comprising the steps of:
a) connecting said Internet Radio System accessed by said user to an Internet Service Provider;
b) connecting said Internet Radio System to an Internet Hosting Service having access to one or more radio stations, each providing on the Internet an Internet radio program comprising an entertainment stream and broadcast radio commercials interleaved therewith, which Hosting Service optionally is said Internet Service Provider;
c) collecting a user profile specific to said user;
d) transmitting said Internet radio programs from said radio station to said Internet Hosting Service;
e) re-transmitting said Internet radio programs from said Internet Hosting Service to said Internet Radio System;
f) said Internet Hosting Service receiving from one or more advertisers a plurality of replacement advertisements, each having associated therewith a demographic target;
g) selecting from said plurality of replacement advertisements at least one targeted advertisement, said selecting being based on a comparison of said demographic target and said user profile;
h) forming said edited program comprising said entertainment stream interleaved with at least one of said targeted advertisements;
i) transmitting said edited program from said Internet Hosting Service to said Internet Radio System;
j) said Internet Hosting Service receiving monetary consideration from said advertiser in exchange for delivering said targeted advertisements to said user of said Internet Radio System;
k) said Internet Frosting Service being enabled by said monetary consideration to compensate said Internet Service Provider on behalf of said Internet Radio System user and thereby provide Internet connectivity to said Internet Radio System; and
l) said user receiving said edited program through said Internet Service Provider via said free Internet connection in exchange for receiving said targeted advertisement on said Internet Radio System.

Conveniently, a large percentage of radio stations utilize a computer system rather than tapes or CD's for the origination of the majority of their audio content, including music and commercials. Such systems, referred to generally as "broadcast automation systems" or "live assist systems" actually play the audio for the music or the commercial. Since the broadcast automation system maintains a listing of all audio events that the station plans to broadcast, including critical information of each event such as event type and duration. it can signal the precise beginning and ending of each event, and can transmit the identifying data associated with each event to an external system such as an Internet Hosting Service. Broadcast automation systems, having the capabilities listed above, facilitate the implementation of an advertising replacements as described herein.

Advantageously, the method of the present invention permits an organization such as an Internet Hosting Service to sell and substitute replacement advertisements in place of originally broadcast advertisements in radio programs broadcast via the Internet. The invention enables the Internet Hosting Service to generate additional revenues and to target advertisements to its customers. Customers are provided with increased opportunity to receive information concerning services or products more attuned to their needs.

Also in accordance with the present invention, there is provided a method for providing a free Internet connection in which the cost of the connection is subsidized by selling advertising. This method anticipates a cooperation between one or more radio stations providing their content on the Internet, one or more Internet Hosting Services providing access to the radio station content, one or more Internet Service Providers providing consumer access to the Internet, and advertisers.

Generally stated, this method enables an Internet Service Provider to transmit advertisements to a user by: (a) an organization such as an Internet Hosting Service or Internet Service Provider selling advertising; (b) creating a no-cost Internet connection between an Internet Service Provider and a user; (c) arranging for the Internet Service Provider to receive a plurality of advertisements from at least one advertiser for monetary consideration resulting from the sale of the advertising; and (d) transmitting at least one of the advertisements to the user. Preferably, the advertisements are received by the user via an Internet radio system, which permits audio as well as visual advertisement transmission. Advantageously, the method of the present invention permits a user to receive the advertisements from an Internet Service Provider via a free Internet connection in exchange for which the user hears advertisements generated by an advertiser.

And also, in accordance with this invention, there is provided a method for providing a free Internet connection for an Internet radio system by selling and substituting replacement audio advertising for the original broadcast advertising transmitted by an Internet radio station.

### BRIEF DESCRIPTION OF THE DRAWINGS

The invention will be more fully understood and further advantages will become apparent when reference is had to the following detailed description and the accompanying drawings, in which:

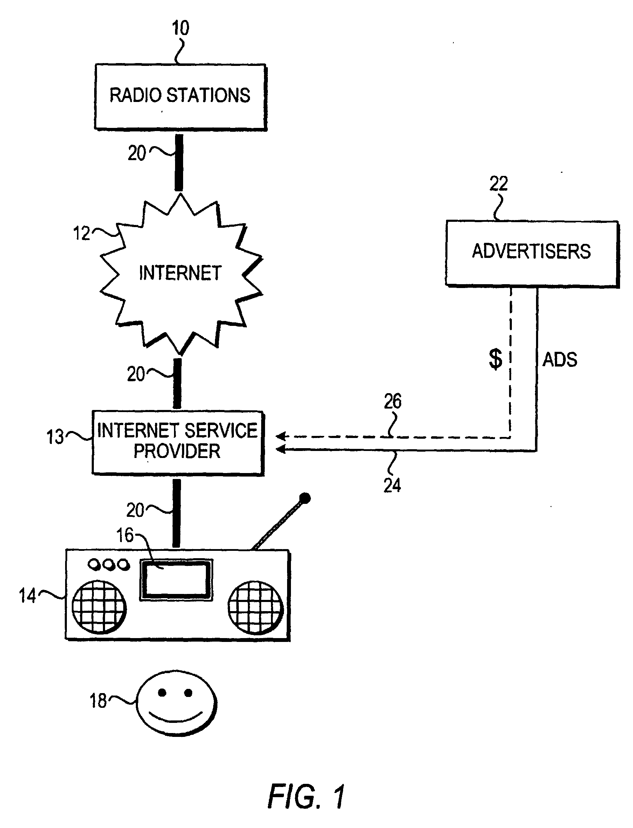

**FIG. 1** is a block diagram representing the flow of information and services between at least one advertiser, a radio station on the Internet, an Internet Hosting Service, an Internet Service Provider, an Internet Radio System with a graphical interface, and an Internet Radio System user in which the user receives no-cost Internet access for radio entertainment in return for receiving at least one advertisement from the Internet Service Provider, which is monetarily compensated by the Internet Hosting Service for delivering said advertisement;

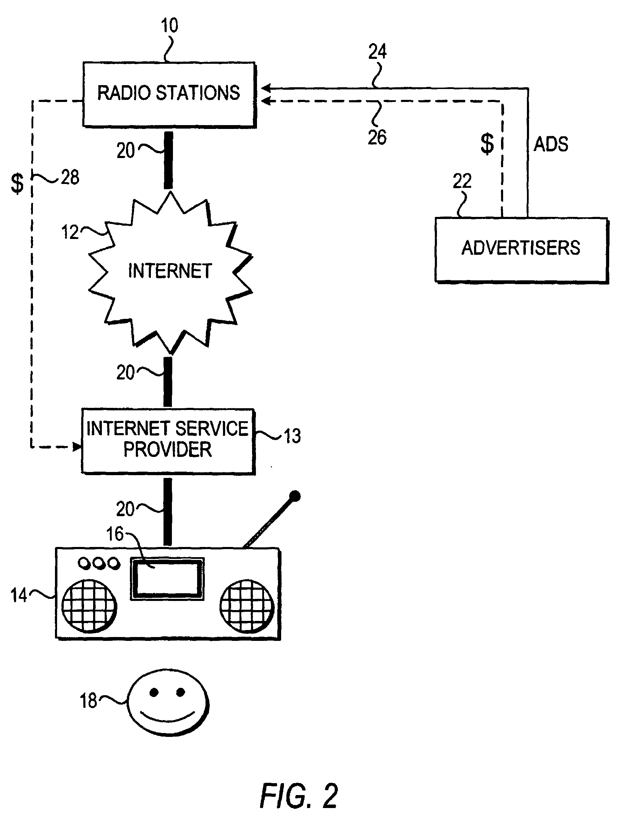

**FIG. 2** is a block diagram similar to **FIG. 1** in which the advertising is delivered from an advertiser to a radio station on the Internet, and transmitted from the radio station to the Internet Radio System via the Internet Service Provider, in which the Internet Service Provider is monetarily compensated by the radio station;

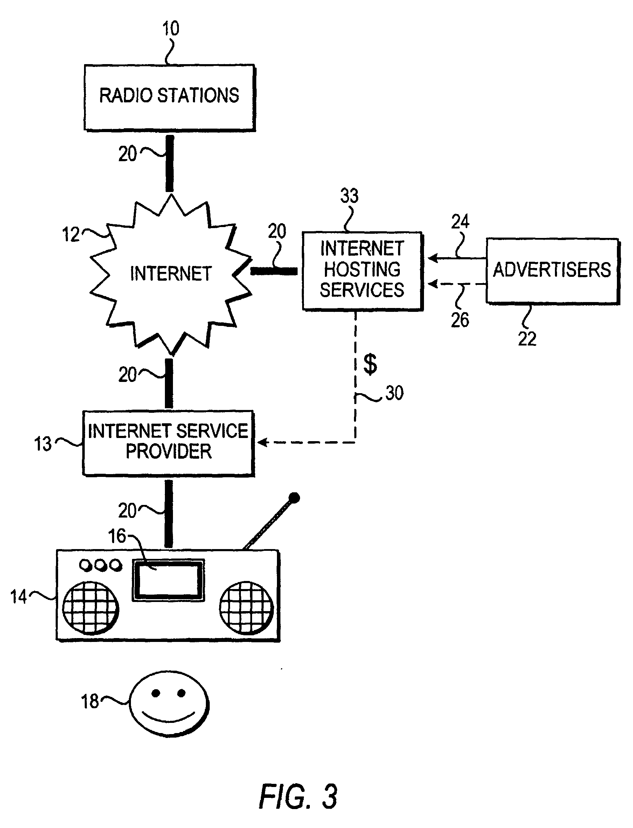

**FIG. 3** is a variation of **FIG. 1** and **FIG. 2** in which an Internet Hosting Service substitutes advertising received from the radio station with advertising received from an advertiser, and transmits the substituted advertising to the user via the Internet Service Provider, which is monetarily compensated by said Internet Hosting Service; and,

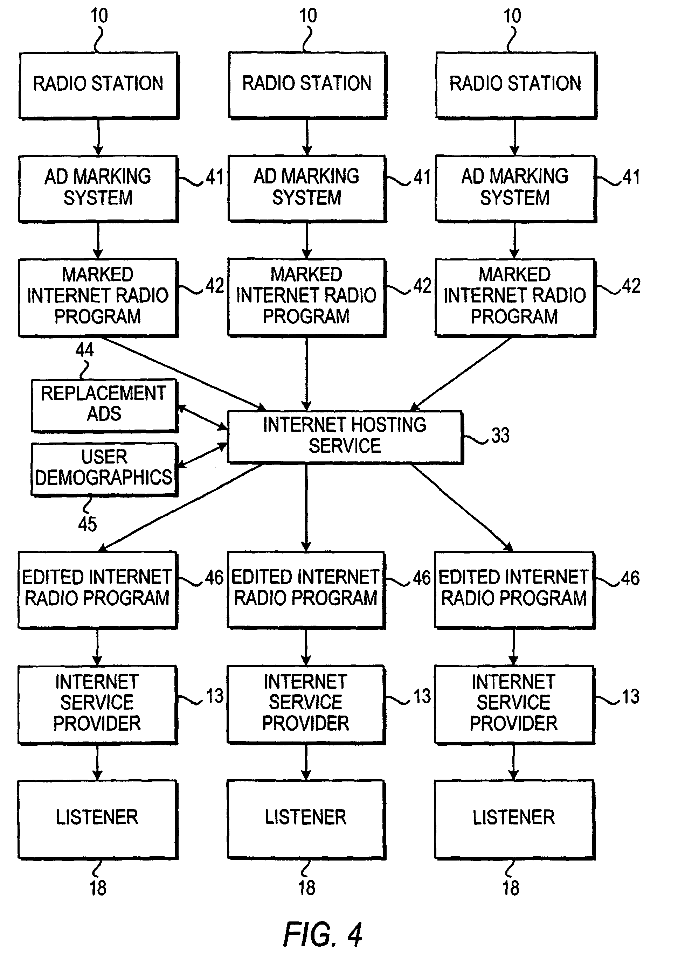

**FIG. 4** is a block diagram representing the modification of advertisements during the flow of an Internet radio program from the program originator to the listener.

### DESCRIPTION OF THE PREFERRED EMBODIMENTS

There is an opportunity for non-PC entertainment devices to access entertainment content made available on the Internet. Such a non-PC entertainment device is an Internet Radio System, also called SurferRadio™ by GEODE Electronics, LLC. In general, entertainment services suffer restricted consumer response if the consumer is charged a subscription fee. Thus, the most popular entertainment services are the free, over-the-air broadcast radio and television. These services are able to broadcast their entertainment content freely to consumers because they are supported by advertising. The advertising material is interleaved over time with the program content so that consumers arc exposed to advertising proportionate to the amount of time they spend benefiting from the broadcaster's program material.

As defined in the above referenced co-pending patent application, the Internet Radio System incorporates a small display screen to enable station selection and similar processes. However, even though advertising may be presented on this display screen, the device still is considered to be a radio device whose characteristic usage will be similar to other radios; that is, users will tend to listen to it as a background device, not watch it like a television. Consequently, in order to provide an advertising supported scheme for an Internet Radio System, the advertising must be audible and interleaved over time with the program content, just like broadcast radio, so that the user will hear advertising proportionate to the amount of time they spend connected to the Internet. Since an Internet Radio System is a narrow purpose appliance suitable only to radio listening on the Internet, the amount of time spent listening is approximately the same as the amount of time spent connected to the Internet. Thus, interleaved advertising is proportionate to both time spent listening and time connected.

In accordance with the present invention, there is provided a method appropriate to an organization such as an Internet Hosting Service for generating revenue by substituting replacement commercial advertisements in place of original broadcast commercials for radio programs broadcast via the Internet. Internet radio programs originate from many different regions of the world. As a result, they are frequently sprinkled with commercial advertisements that are targeted to the region from which the program originated. A commercial for an automobile dealer in Lisbon is of little value to an Internet listener in Philadelphia. An Internet Hosting Service providing Internet radio station access to the listener would benefit by substituting commercials of advertisers interested in reaching such listeners.

Optionally, the invention provides a method of generating increased revenue by selling targeted advertising wherein the advertisers specify demographic targets for their commercials, user profiles are collected about individual users, and commercials are matched to user profiles to deliver the desired targeted advertising.

As stated above, the invention provides a method for substituting replacement radio commercials in place of broadcast radio commercials by an Internet Hosting Service. In practice, each commercial is marked by the radio station with a digital marker that indicates the start and length of each commercial in the program broadcast. When the program is received by the Internet Hosting Service, each commercial is identified by its marker and a replacement commercial of the appropriate length is selected from a list of commercials kept by the Internet Hosting Service and substituted in place of the original commercial.

Also in accordance with the present invention, there is provided a method of generating revenue for providing a free Internet connection in which the cost of the connection is subsidized by selling advertising. This method anticipates a cooperation between one or more radio stations providing their content on the Internet, one or more Internet Hosting Services or equivalent centralized data processing facilities providing access to the radio station content, one or more Internet Service Providers providing consumer access to the Internet, and advertisers. More specifically, the method enables an Internet Hosting Service or an Internet Service Provider to transmit advertisements to a user by: (a) selling advertising; (b) creating a no-cost Internet connection between an Internet Service Provider and a user; (c) arranging for the Internet Service Provider to receive a plurality of advertisements from at least one advertiser for monetary consideration, wherein the advertisements may be received directly from the advertiser, or indirectly from the radio station or an Internet Hosting Service; and (d) transmitting at least one of the advertisements to the user in exchange for monetary compensation offsetting the cost of providing the free Internet connection. Said Internet Hosting Service may be the same entity as the Internet Service Provider. Advertisements may be audio ads inserted by the Internet Hosting Service as replacements for audio ads received in the entertainment stream from a radio station.

And also, in accordance with this invention, there is provided a method appropriate to an organization such as an Internet Hosting Service for generating revenue to provide a free Internet connection for an Internet radio system by selling and substituting replacement audio advertising for the original broadcast advertising transmitted by an Internet radio station.

The invention will be more fully understood from the following description of the preferred embodiments, taken in connection with the appended drawings. Referring now to **FIG. 1** of the drawings, there is shown a radio station 10 connected to the Internet communications network 12. The communications network 12 includes a service provider 13, also referred to as an Internet Service Provider ("ISP"), and an Internet Radio System 14 with a graphical interface 16 by which an Internet Radio System user 18 can receive, hear and view communications from the service provider 13.

As previously noted the Internet Radio System is available from Geode Electronics, LLC, under the tradename "SurferRadio™". Generally stated, Internet radios are devices for providing Internet access to audio and visual content providers that include: (a) a means to connect to the Internet encompassing a modem, modem communications software, and a phone line connections; (b) an automatic logging-in means for connecting to a predetermined Internet Service Provider including automatic dialing and an automatic login process; (c) an authorizing identification means to identify the device type to the Internet Service Provider; (d) a means to connect to a predetermined Internet Hosting Service, which may be the same entity as the Internet Service Provider; (e) a means for custom connection to the Internet Hosting Service such that the Internet Hosting Service recognizes and cooperates with the unique nature of the device type; (f) a means to receive advertiser supported content including advertising such as interleaved audio ads and display ads; (g) a means for a display screen which can show the channel selection process, visual display ads, text and control messages, and other information deemed desirable to the consumer, advertiser, content provider and other service providers on the network; (h) a means to select among different audio content provider channels which is managed by a predetermined set of commands unique to this device type; (i) a means to select among different audio content provider channels via selections such as by content type (i.e. jazz, classical, news, sports, etc.), by location of content provider (local, city, country), and by language; and (j) audio means for receiving and playing Internet radio content such as offered by radio stations and other audio content providers broadcasting on the Internet.

As is well known, the Internet 12 comprises a multitude of sites, each of which is specific for particular information. Thus, the service provider 13 is capable of transmitting information from sources on the Internet 12, such as radio stations 10, to the user. Means for transmitting such information are readily available and outside of the scope of the present invention. Accordingly, entertainment content 20 is broadcast over the Internet 12 from the radio station 10 to the Internet Radio System 14 via the service provider 13. In accordance with the present invention, revenue is generated by service provider 13 by selling advertisements for a plurality of advertisers 22, and delivering audio, audio/visual, or visual advertising indicated by solid line 24 to user 18 via Internet Radio System 14. Advertiser 22 may act as an agent for the service provider 13, or may be the same entity as said service provider, and may deliver advertising 24 promoting business offerings of said service provider. In this arrangement, the economic value derived from delivering advertising 24 on behalf of the service provider will serve in lieu of monetary compensation 26 to said service provider 13. Visual advertising 24 is presented on graphical interface 16 for viewing by user 18, and audible advertising 24 is played aloud by Internet Radio System 14 in the fashion of traditional radio. As used herein, a plurality of advertisers 15 refers to at least one advertiser. Likewise, advertisements refer to at least one advertisement. Naturally, such payment 26 to the service provider 13 would conform to generally accepted industry standards. Advantageously, the monetary consideration 26 paid to the service provider 13 provides service provider 13 with sufficient operating revenue to provide user 18 access to the Internet 12 without payment by user 18.

The timing of the transmission of the advertisements 24 is not fixed and can be based upon the preference of advertiser 22 or service provider 13. Thus, advertisements 24 can be transmitted to user 18 during initial access or during one or more preselected intervals of time extant while Internet Radio System 14 is connected to the service provider 13 for reception of radio entertainment.

Referring now to **FIG. 2** of the drawings, the entities in the diagram are the same as those described in **FIG. 1**. User 18 connects to radio station 10 on Internet 12 via Internet Radio System 14 and service provider 13. Radio station 10 generates revenue by selling advertising from advertisers 22 to provide audio, audio/visual, or visual advertising 24 to listeners 18 in return for monetary consideration 26. As part of the entertainment content stream 20, Radio station 10 delivers advertising 24 to user 18 via Internet Radio System 14 and service provider 13, which may be played audibly, presented on graphical display 16, or both. Radio station 10, in turn, compensates service provider 13 with monetary consideration 28 for delivering entertainment content 20 to user 18, without the separate payment of a user fee. Thus, service provider 13 provides user 18 and Internet Radio System 14 with a free Internet connection.

Advantageously, this system permits a user 18 to listen to entertainment content 20 which is interleaved with audio advertisements 24 while visual advertisements are transmitted to user 18 via the graphical interface 16 of the Internet Radio System 14. In this manner, visual advertisements can be continuously transmitted to the user 18 at the same time that audio content and audio advertising are also transmitted to user 18.

Optionally, the arrangement may further comprise an Internet Hosting Service, hereinafter described as "hosting service" which may be the organization generating revenue by selling advertising to deliver to listeners 18. In **FIG. 3,** there is illustrated a hosting service 33 having the capability to receive transmissions from the radio station 10 and pass these transmissions onto user 18. Hosting service 33 may be any type of service which has the ability to receive communications from a radio station 10. Therefore, hosting service 33 may be a private communications entity, a broadcasting network data center, a service provider or the like. In one embodiment, hosting service 33 may comprise the same entity as the service provider 13. Importantly, as described in co-pending U.S. Provisional Patent application of Emerson et al., entitled "System for Modifying Advertising Content of Internet Radio Broadcasts", filed February 10, 1999, and as described in **Fig. 4**, hosting service 33 can have the capability to remove and replace advertisements, whether comprised of audio, audio/visual, or video content, which are transmitted by the radio station 10 with advertisements of a similar nature offered by the hosting service 33. Thus, hosting service 33 has the ability to pass the entertainment content 20 received from radio station 10 through the service provider 13 to user 18, but may substitute the advertising received from the advertisers 22 in place of the advertising transmitted by radio station 10. In this instance, the hosting service 33 receives monetary consideration 26 from the advertisers. In turn, the hosting service 33 pays some or all of the monetary consideration 26 received from the advertisers 22 to the service provider 13. This channeling of revenue to the service provider 13, generated by the sale of advertising, allows the service provider to provide no-cost Internet access to a user.

As indicated above, an Internet Hosting Service generates revenue by selling advertising for delivery to Internet entertainment listeners. As illustrated by **FIG. 4** of the drawings, marked Internet radio programs 42 from a plurality of radio stations 10 are sent to hosting service 33 via the Internet. The arrows in Fig. 1 indicate transfers, including Internet transfers. These Internet radio programs have broadcast radio commercials as part of their content. Ad marking systems 41, which may be broadcast automation systems of the radio stations, introduce digital markings to accompany the audio content indicating the beginning and duration of audio ads in the audio stream. Further, ad marking systems 41 may digitize the radio station audio content into packets bearing sequential serial numbers, and the digital markings which indicate the beginning and end of audio ads may relate such beginnings and endings to audio packet serial numbers. Hosting service 33 receives the marked audio stream wherein the audio may be music interleaved with commercials, and the markings may be digital data packets indicating the beginning and ending of commercials within that audio stream. Hosting service 33 maintains a database of replacement audio ads 44 encompassing the ads and associated data describing each ad such as duration and the desired user demographics that the advertiser would like to reach. Hosting service 33 sells advertising to generate revenue, and replaces audio ads emanating from the radio station program originator 10 with replacement ads of equivalent duration drawn from replacement ad database 44, in the process creating an edited Internet radio program 46. The resolution of the Ad Marking System 41 in digitizing the audio stream into serialized packets enables the creation of edited Internet radio programs 46 which are absent of audible artifacts to indicate that ad substitution has taken place. Edited Internet radio programs 46 are delivered to listeners 18 via the Internet Service Providers 13 which provide Internet access to the listeners 18. Listeners 18 listen to the Internet radio stations from program originators 10, hearing different ads from those who might contemporaneously listen to the radio station's over-the-air broadcast with a conventional radio.

Optionally, the hosting service 33 may examine the desired user demographics associated with replacement ads 44 and match them against the user demographic database 45 comprised of demographic information about listeners 18. If listeners 18 have differing demographics, the edited Internet radio programs 46 may be unique for each demographic type of listener 18 who may be listening to the same Internet radio station. That is, males listening to Internet radio station WXYZ may receive an edited Internet radio program 46 which differs from that received by females listening to the same station.

The method for substituting replacement radio commercials in place of a plurality of broadcast radio commercials on an Internet radio program transmitted by a hosting service 33 to a listener 18 via an Internet service provider 13 comprises the steps of: (a) generating a plurality of replacement radio commercials of various predetermined time lengths, whereby each replacement radio commercial has an associated time length; (b) digitizing the replacement radio commercials and the associated time lengths; (c) storing in an array the digitized replacement radio commercials and the associated time lengths, the array being stored by the Internet hosting service 33; (d) marking each of the broadcast radio commercials with a digital marker by the ad marking system 41, the digital marker indicating the start and duration time of the broadcast radio commercial within the Internet radio program 12; (e) transmitting of the marked Internet radio program 42 to the Internet hosting service 33; (f) receiving of the marked Internet radio program 42 by the Internet hosting service 33; (g) examining of the marked Internet radio program 42 by the Internet hosting service 13; (h) detecting a digital marker of a commercial on the marked Internet radio program 42; (i) reading the duration time of the commercial from the detected digital marker; (j) comparing the read duration time with the associated time lengths stored in the array; (k) selecting from the array a digitized replacement radio commercial having an associated time length equal to the read duration time; (I) substituting the selected digitized replacement radio commercial in place of the commercial; and (m) repeating steps (h) through (1) until the end of the Internet radio program.

Having thus described the invention in rather full detail, it will be understood that such detail need not be strictly adhered to but that various changes and modifications may suggest themselves to one skilled in the art, all falling within the scope of the present invention as defined by subjoined claims.

## Claims

1. A method for providing a free Internet connection for delivery of edited program content to a user (18) of an Internet Radio System (14) by enabling an Internet Hosting Service (33) to generate revenue by selling and transmitting targeted advertisements to said Internet Radio System, comprising the steps of:
a) connecting said Internet Radio System accessed by said user to an Internet Service Provider (13);
b) connecting said Internet Radio System (14) to an Internet Hosting Service (33) having access to one or more radio stations (10), each providing on the Internet an Internet radio program comprising an entertainment stream and broadcast radio commercials interleaved therewith, which Hosting Service optionally is said Internet Service Provider (13);
c) collecting a user profile specific to said user;
d) transmitting said Internet radio programs from said radio station (10) to said Internet Hosting Service (33);
e) re-transmitting said Internet radio programs from said Internet Hosting Service to said Internet Radio System (14);
f) said Internet Hosting Service receiving from one or more advertisers (22) a plurality of replacement advertisements (44), each having associated therewith a demographic target (45);
g) selecting from said plurality of replacement advertisements at least one targeted advertisement, said selecting being based on a comparison of said demographic target and said user profile;
h) forming said edited program (46) comprising said entertainment stream interleaved with at least one of said targeted advertisements;
i) transmitting said edited program from said Internet Hosting Service to said Internet Radio System;
j) said Internet Hosting Service receiving monetary consideration (26) from said advertiser in exchange for delivering said targeted advertisements to said user of said Internet Radio System;
k) said Internet Hosting Service being enabled by said monetary consideration to compensate (30) said Internet Service Provider (13) on behalf of said Internet Radio System user and thereby provide Internet connectivity (20) to said Internet Radio System; and
l) said user receiving said edited program (46) through said Interet Service Provider (13) via said free Internet connection in exchange for receiving said targeted advertisement on said Internet Radio System (14).

2. A method for providing a free Internet connection for delivery of edited program content to a user of an Internet Radio System as recited in Claim 1, wherein said targeted advertisements are audible.

3. A method for providing a free Internet connection for delivery of edited program content to a user of an Internet Radio System as recited in Claim 1, wherein said targeted advertisements are visual.

4. A method for providing a free Internet connection for delivery of an edited program to a user of an Internet Radio System (14) as recited in Claim 1, wherein:
a) said plurality of replacement advertisements (44) comprises replacement radio commercials which are audible and of various predetermined time lengths, whereby each replacement radio commercial has an associated time length;
b) said method further comprises the steps of:
(i) digitizing said replacement radio commercials and said associated time lengths;
(ii) storing in an array said digitized replacement radio commercials and said associated time lengths, said array being stored at said Internet hosting service (33);
(iii) marking each of said broadcast radio commercials with a digital marker by said radio station, said digital marker indicating the start and duration time of said broadcast radio commercial within said Internet radio program;
(iv) transmitting said marked Internet radio program to said Internet hosting service (33);
(v) receiving said marked Internet radio program by said Internet hosting service;
(vi) examining said marked Internet radio program by said Internet hosting service;
(vii) detecting said digital marker of said broadcast radio commercial on said received Internet broadcast program;
(viii) reading the duration time, of said commercial, from said detected digital marker; and
(ix) substituting at least one of said targeted advertisements for at least one of said broadcast radio commercials, said targeted advertisements being further selected from among said replacement radio commercials having said associated time length equal to said read duration time; and
c) steps (i) through (ix) are repeated until the end of said Internet radio program, whereby the listener (18) of said Internet radio program receives an edited program (46) having one or more replacement radio commercials substituted in place of said broadcast radio commercials.

5. A method as recited in Claim 4, wherein said marking is performed by a radio station broadcast automation computer system.

6. A method as recited in Claim 5 wherein the audio stream of the radio station is digitized into packets bearing sequential serial numbers, and said marking of broadcast commercials by marking the start time and duration of the commercial identifies the audio packet serial numbers constituting the beginning and duration of the audio commercial to be replaced.

## Patentansprüche

1. Verfahren zum Schaffen einer kostenfreien Internetverbindung zur Lieferung aufbereiteten Programminhalts an einen Nutzer (18) eines Internetradiosystems (14) durch Befähigen eines Internet-Hosting-Service (33) zum Erzielen von Einnahmen durch das Verkaufen und Übertragen gezielter Werbungen an das Internetradiosystem, umfassend die Schritte:
a) Verbinden des vom Nutzer abgerufenen Internetradiosystems mit einem Internet-Service-Anbieter (13);
b) Verbinden des Internetradiosystems (14) mit einem Internet-Hosting-Service (33), welcher Zugang zu einer oder mehreren Radiostationen (10) hat, von denen jede ein Internetradioprogramm im Internet bereitgestellt, welches einen Unterhaltungs-Datenstrom und darin eingestreute Rundssendungsradiowerbungen umfasst, wobei fakultativ der Hosting-Service der Internet-Service-Provider (13) ist;
c) Erfassen eines für den Nutzer spezifischen Nutzer-Profils;
d) Übertragen der Internetradioprogramme von der Radiostation (10) zum Internet-Hosting-Service (33);
e) Rückübertragen der Internetradioprogramme vom Internet-Hosting-Service zum Intemetradiosystem (14);
f) wobei der Internet-Hosting-Service mehrere Austauschwerbungen (44) von einem oder mehreren Werbern (22) empfängt, wobei jeder der Austauschwerbungen eine zugehörige demographische Vorgabe (45) hat;
g) Auswählen mindestens einer gezielten Werbung aus den mehreren Austauschwerbungen, wobei das Auswählen auf einem Vergleich der demographischen Vorgabe und dem Nutzer-Profil basiert;
h) Bilden des aufbereiteten, den Unterhaltungs-Datenstrom umfassenden Programms (46), wobei mindestens eine der zielgerichteten Werbungen in den Unterhaltungs-Datenstrom eingestreut ist;
i) Übertragen des aufbereiteten Programms vom Internet-Hosting-Service zum Intemetradiosystem;
j) wobei der Internet-Hosting-Service eine finanzielle Vergütung (26) vom Werber im Austausch für das Liefern der gezielten Werbungen an den Nutzer des Internetradiosystems erhält;
k) wobei der Internet-Hosting-Service durch die finanzielle Vergütung den Internet-Service-Anbieters (13) für den Internetradiosystemnutzer entschädigen (30) und dadurch Internetkonnektivität (20) zum Internetradiosystem schaffen kann; und
l) wobei der Nutzer das aufbereitete Programm (46) über den Internet-Service-Provider (13) über die kostenfreie Internetverbindung im Tausch für das Empfangen der gezielten Werbungen in dem Intemetradiosystem (14) empfängt.

2. Verfahren zum Schaffen einer kostenfreien Internetverbindung zur Lieferung aufbereiteten Programminhalts an einen Nutzer eines Internetradiosystems nach Anspruch 1, wobei die gezielten Werbungen akustischer Art sind.

3. Verfahren zum Bereitstellen einer kostenfreien Internetverbindung zur Lieferung aufbereiteten Programminhalts an einen Nutzer eines Internetradiosystems nach Anspruch 1, wobei die gezielten Werbungen visueller Art sind.

4. Verfahren zum Schaffen einer kostenfreien Internetverbindung zur Lieferung eines aufbereiteten Programms an einen Nutzer eines Internetradiosystems nach Anspruch 1, wobei:
a) die mehreren Austauschwerbungen (44) Austauschradiowerbungen umfassen, welche akustischer Art sind und verschiedene vorbestimmte zeitliche Längen haben, wobei jede Austauschradiowerbung eine zugehörige zeitliche Länge hat;
b) wobei das Verfahren darüber hinaus die Schritte umfasst:
i) Digitalisieren der Austauschradiowerbungen und der zugehörigen zeitlichen Längen;
ii) Speichern der digitalisierten Austauschradiowerbungen und der zugehörigen zeitlichen Längen in einem Feld, wobei das Feld bei dem Internet-Hosting-Service (33) gespeichert wird;
iii) Markieren jeder der Rundsendungsradiowerbungen mit einer digitalen Markierung, wobei die digitale Markierung den Beginn und die Dauer der Rundsendungsradiowerbung in dem Internet angibt;
iv) Übertragen des markierten Internetradioprogramms an den Internet-Hosting-Service (33);
v) Empfangen des markierten Internetradioprogramms durch den Internet-Hosting-Service;
vi) Prüfen des markierten Internetradioprogramms durch den Internet-Hosting-Service;
vii) Erfassen der digitalen Markierungen der Rundsendungsradiowerbung in dem empfangenen Internetrundsendungsprogramm;
viii) Lesen der Dauer der Werbung von der erfassten digitalen Markierung; und
ix) Substituieren wenigstens eine der Rundsendungsradiowerbungen durch wenigstens eine der gezielten Werbungen, wobei die gezielten Werbungen ferner so aus den Austauschradiowerbungen ausgewählt werden, dass die zugehörige zeitliche Länge gleich der abgelesenen Dauer ist; und
c) Wiederholen der Schritte (i) bis (ix) bis zum Ende des Internetradioprogramms, wobei der Hörer (18) des Internetradioprogramms ein aufbereitetes Programm (46) empfängt, welches eine oder mehrere an der Stelle der Rundsendungsradiowerbungen substituierte Austauschradiowerbungen aufweist.

5. Verfahren nach Anspruch 4, wobei das Markieren von einem Computersystem für Rundsendungsautomatisierung der Radiostation durchgeführt wird.

6. Verfahren nach Anspruch 5, wobei der Audio-Datenstrom der Radiostation in sequentielle Seriennummern tragende Pakete digitalisiert ist, und das Markieren der Rundsendungswerbungen durch Markieren der Startzeit und der Dauer der Werbung die Audiopaketseriennummern identifiziert, die den Beginn und die Dauer der zu ersetzenden Audiowerbung darstellen.

## Revendications

1. Procédé pour fournir une connexion Internet gratuite pour la distribution d'un contenu de programme préparé vers un utilisateur (18) d'un système de radio par Internet (14) en permettant à une service d'hébergement Internet (33) de générer un revenu par la vente et la transmission d'annonces publicitaires ciblées vers ledit système de radio par Internet, comprenant les étapes consistant à:
a) connecter ledit système de radio par Internet (14) auquel a accès ledit utilisateur à un fournisseur de service Internet (13);
b) connecter ledit système de radio par Internet (14) à un service d'hébergement Internet (33) ayant accès à une ou plusieurs stations de radio (10), fournissant chacune sur l'Internet un programme de radio par Internet comprenant un programme continu de divertissement et des messages commerciaux radiodiffusés intercalés dans celui-ci, lequel service d'hébergement est facultativement ledit fournisseur de service Internet (13);
c) recueillir un profil d'utilisateur spécifique audit utilisateur;
d) transmettre lesdits programmes de radio par Internet depuis ladite station de radio (10) vers ledit service d'hébergement Internet (33);
e) re-transmettre lesdits programmes de radio par Internet depuis ledit service d'hébergement Internet vers ledit système de radio par Internet (14);
f) ledit service d'hébergement Internet recevant de un ou plusieurs annonceurs (22) plusieurs annonces publicitaires de remplacement (44), ayant chacune une cible démographique (45) associée avec elle;
g) sélectionner à partir desdites multiples annonces publicitaires de remplacement au moins une annonce publicitaire ciblée, ladite sélection étant basée sur une comparaison de ladite cible démographique et dudit profil d'utilisateur;
h) constituer ledit programme préparé (46) comprenant ledit programme continu de divertissement dans lequel est intercalée au moins une desdites annonces publicitaires ciblées;
i) transmettre ledit programme préparé depuis ledit service d'hébergement Internet vers ledit système de radio par Internet;
j) ledit service d'hébergement Internet recevant une contrepartie financière (26) dudit annonceur en échange de la fourniture desdites annonces publicitaires ciblées vers ledit utilisateur dudit système de radio par Internet;
k) ledit service d'hébergement Internet étant en mesure, par cette contrepartie financière, de compenser (30) ledit fournisseur de service Internet (13) au nom dudit utilisateur du système de radio par Internet, et ainsi fournir une connexion Internet (20) vers ledit système de radio par Internet; et
l) ledit utilisateur recevant ledit programme préparé (46) par l'intermédiaire dudit fournisseur de service Internet (13) via ladite connexion Internet gratuite en échange de la réception de ladite annonce publicitaire ciblée sur ledit système de radio par Internet (14).

2. Procédé pour fournir une connexion Internet gratuite pour la distribution d'un contenu de programme préparé vers un utilisateur d'un système de radio par Internet tel que décrit dans la revendication 1, dans lequel lesdites annonces publicitaires ciblées sont sonores.

3. Procédé pour fournir une connexion Internet gratuite pour la distribution d'un contenu de programme préparé vers un utilisateur d'un système de radio par Internet tel que décrit dans la revendication 1, dans lequel lesdites annonces publicitaires ciblées sont visuelles.

4. Procédé pour fournir une connexion Internet gratuite pour la distribution d'un programme préparé vers un utilisateur d'un système de radio par Internet (14) tel que décrit dans la revendication 1, dans lequel:
a) lesdites multiples annonces publicitaires de remplacement (44) comprennent des messages commerciaux radio de remplacement qui sont sonores et de différentes durées prédéterminées, moyennant quoi chaque message commercial radio de remplacement a une durée associée;
b) ledit procédé comprenant en outre les étapes consistant à:
(i) digitaliser lesdits messages commerciaux radio de remplacement et lesdites durées associées;
(ii) stocker dans une matrice lesdits messages commerciaux radio de remplacement et lesdites durées associées digitalisés, ladite matrice étant stockée audit service d'hébergement Internet (33);
(iii) marquer chacun desdits messages commerciaux radiodiffusés avec un marqueur digital par ladite station de radio, ledit marqueur digital indiquant le début et la durée dudit message commercial radiodiffusé dans ledit programme de radio par Internet;
(iv) transmettre ledit programme marqué de radio par Internet vers ledit service d'hébergement Internet (33);
(v) recevoir ledit programme marqué de radio par Internet par ledit service d'hébergement Internet;
(vi) examiner ledit programme marqué de radio par Internet par ledit service d'hébergement Internet;
(vii) détecter ledit marqueur digital dudit message commercial radiodiffusé sur ledit programme reçu de radiodiffusion par Internet;
(viii) lire la durée dudit message commercial, à partir dudit marqueur digital détecté; et
(ix) substituer au moins une desdites annonces publicitaires ciblées pour au moins l'un desdits messages commerciaux radiodiffusés, lesdites annonces publicitaires ciblées étant en outre sélectionnées parmi lesdits messages commerciaux radio de remplacement ayant ladite durée associée égale à ladite durée lue; et
c) les étapes (i) à (ix) sont répétées jusqu'à la fin dudit programme de radio par Internet, moyennant quoi l'auditeur (18) dudit programme de radio par Internet reçoit un programme préparé (46) ayant un ou plusieurs messages commerciaux radio de remplacement substitués à la place desdits messages commerciaux radiodiffusés.

5. Procédé tel que décrit dans la revendication 4, dans lequel ledit marquage est effectué par un système d'ordinateur d'automatisation de la diffusion de la station de radio.

6. Procédé tel que décrit dans la revendication 5, dans lequel le programme audio continu de la station de radio est digitalisé en paquets portant des numéros de série séquentiels, et ledit marquage des messages commerciaux diffusés par le marquage du temps de départ et de la durée du message commercial identifie les numéros de série des paquets audio constituant le début et la durée du message commercial audio à remplacer.
